# EUROPEAN PATENT SPECIFICATION

(11) **EP 0 427 893 B1**
(45) Date of publication and mention of the grant of the patent: **25.08.1993**
(21) Application number: 89311712.7
(22) Date of filing: 13.11.1989
(51) Int. Cl.: B65G 11/06

(54) **Improved article chute**
Rutsche für Stückgut
Goulotte pour articles

(43) Date of publication of application: 22.05.1991
(73) Proprietor: THE POST OFFICE, London SW1X 1PX (GB)
(72) Inventor: Nair, Moolamkuzhiel Raghavan Viswanathan, Swindon SN5 8NG (GB)
(74) Representative: Opperman, Stuart Richard

(56) References cited:
- GB-A- 597 065
- GB-A- 2 191 177
- GB-A- 2 213 806
- GB-A- 2 220 927
- US-A- 3 565 226

## Description

This invention relates to article chutes for conducting articles, for example postal items, from one level to another, according to the first part of claim 1, and is concerned with the provision of certain improvements in such chutes.

A known chute of the Applicants and marketed under the name 'Safeglide' (see also GB-A-2 213 806 and GB-A-2 191 177) comprises a helical floor extending around a central newel or support post and having an outer peripheral sidewall. The floor comprises an inner part which is substantially horizontal and an outer part which is cambered at an angle which is so related to the pitch and radius of the chute that articles descend the chute at a constant speed or at least under conditions in which their speed does not exceed a given maximum.

Whilst the forming of the chute with a floor having a substantially horizontal inner part has certain advantages, in that the inner floor part serves as a storage area should the flow of articles from the chute be interrupted, the articles moving back onto the cambered part on the flow of articles from the chute being restored, it also has certain drawbacks, particularly as regards manufacture especially if the chute is to be made in metal. Furthermore in some cases a significant storage area in the chute is not required.

Accordingly, the invention provides an article chute comprising a helical floor having a peripheral side wall, the floor being cambered in the radial direction with the outer edge thereof above that of the inner edge, characterised in that the angle of camber (α) is related to the pitch and radius of the chute, such that articles descend the chute under conditions in which their velocity does not exceed a given maximum and the cambered floor has substantially the same angle of camber over more than 85% of its radial extent and, in radial section, terminates at its inner edge in a horizontal portion.

The chute may be postless that is to say, the floor extends inwardly to the centre of the chute in which case additional support means for the floor will normally be required or alternatively the floor may extend around a central newel post.

Two examples of chute in accordance with the invention will now be described, by way of example, with reference to the accompanying drawings in which;
Figure 1 shows a side elevation of a chute of the invention in postless form.
Figure 2 shows a detail of the chute to an enlarged scale, and
Figure 3 shows a side elevation of a chute of the invention having a central newel post.

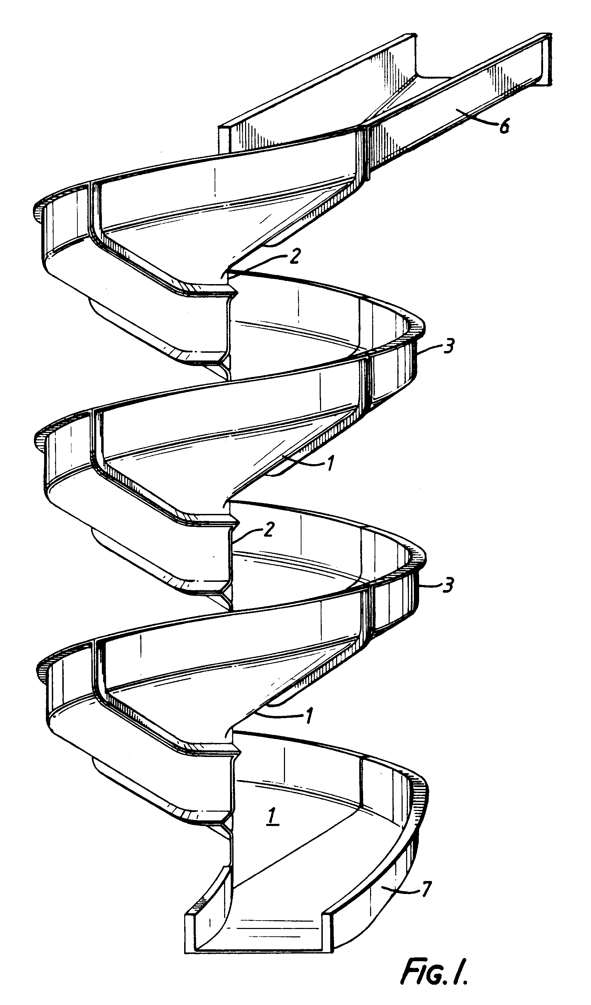

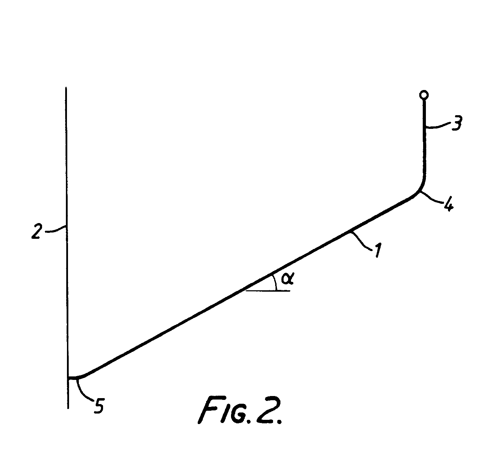

Referring to Figures 1 - 3, the chute comprises a floor member 1 helically wound about an upright axis 2 at a camber angle α, the floor being provided at its outer edge with a peripheral sidewall 3. In more detail (see particularly Figure 2), the floor merges with the wall 3 in a radiussed portion 4, the radius of which is preferably in the range of 25 - 100 mm. Furthermore the floor terminates at its inner edge in a flattened portion 5 although this constitutes a very small proportion of the total radial extent of the floor, such as 50 - 100 mm in a chute radius of 700 mm. Thus the cambered part occupies at least 85% of the extent of the floor.

The chute may be manufactured in metal, e.g. mild steel, or in glass reinforced plastics material. Furthermore as indicated in Figure 1, the chute is conveniently manufactured in 90° sections which are flanged along their edges which adjoin the edges of neighbouring sections to facilitate assembly of the chutes as by bolting the sections together, for example.

The chute is also provided at the upper end of the chute, with an entry section 6 to allow articles to be fed onto the chute, and to facilitate the discharge of articles from the chute at the lower end, the chute is provided with an exit section 7, this section preferably adjoining an exit table (not shown). If desired one or more further entry sections may be provided between the entry section 6 and the exit section 7, to provide for a multi-feed of the chute.

Preferably the surface of the floor member 1 and the side wall 3 is treated with a low friction compound to maintain performance of the chute under varying humidity conditions.

In use of the chute, articles are fed onto the entry section 6 and the particular camber angle α for each application of the chute will be so related to the pitch and radius of the chute that the articles will descend the chute at a constant speed or at least under conditions that their speed does not exceed a given maximum. These items will travel down the cambered area and will only occupy a position near the centre of the chute during occasional storage or in the case of high frictional items which will be outside the application for which the particular chute is designed. The articles will leave the chute through the exit section 7.

Typical dimensions of the chute, depending upon the application, are:

| PITCH | RADIUS | CAMBER ANGLE α |
|---|---|---|
| 1040 mm | 700 mm | 33° |
| 1600 mm | 1160 mm | 28° |
| 1600 mm | 907 mm | 36° |
| 1600 mm | 890 mm | 30° |
| 1900 mm | 1500 mm | 31° |

The chute described above is postless that is to say, the chute is without any form of central or support post, and as such it will in practice require some means of support. This may take the form of a surrounding framework, surrounding support or any other suitable support means.

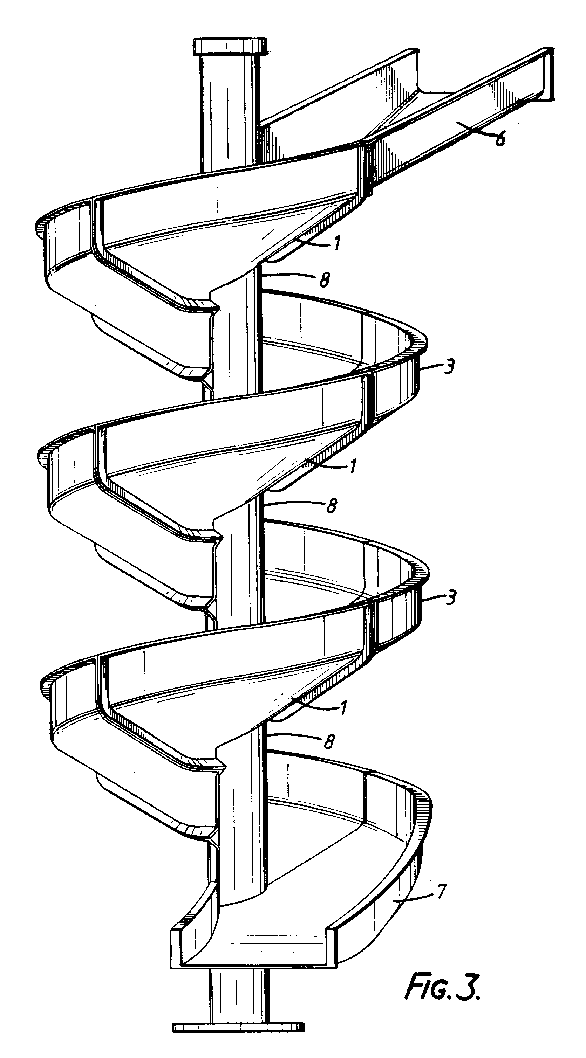

Alternatively and referring now to Figure 3, the floor member 1 may extend around a central newel post 8, though in other respects the chute is the same as that shown in Figure 1. Thus for example, the floor 1 will be of the shape indicated in Figure 2 with a radius 4 between the floor and the side wall and a further radius 5 between the floor and the post 8.

## Claims

1. An article chute comprising a helical floor (1) having a peripheral side wall (3), the floor being cambered in the radial direction with the outer edge (4) thereof above that of the inner edge (5), characterised in that the angle of camber (α) is related to the pitch and radius of the chute, such that articles descend the chute under conditions in which their velocity does not exceed a given maximum and the cambered floor (1) has substantially the same angle of camber over more than 85% of its radial extent and, in radial section, terminates at its inner edge (5) in a horizontal portion.

2. An article chute as claimed in claim 1, characterised in that the floor (1) merges with a peripheral side wall (3) in a radiussed portion (4).

3. An article chute as claimed in claim 1 or 2, characterised in that the floor (1) of the chute extends inwardly to the centre of the chute.

4. An article chute as claimed in claim 1 or 2, characterised in that the floor (1) of the chute extends around a central newel post (8).

5. An article chute as claimed in any preceding claim, characterised in that the chute is made up of sections of approximately 90° in extent, the adjoining edges of adjacent sections being flanged and secured together.

6. An article chute as claimed in any preceding claim, wherein the chute is made of metal.

7. An article chute as claimed in any one of claims 1 to 5, characterised in that the chute is made of glass reinforced plastics material.

## Patentansprüche

1. Stückgutrutsche, beinhaltend einen gewendelten Boden (1) mit einer außenseitigen Seitenwand (3), wobei radial gesehen die Außenkante (4) des Bodens zu dessen Innenkante (5) überhöht ist, dadurch gekennzeichnet, daß der Neigungswinkel (α) bezogen auf Steigung und Radius der Rutsche derart ausgelegt ist, daß die Stücke beim Herunterfallen der Rutsche eine bestimmte Höchstgeschwindigkeit nicht überschreiten und daß der überhöhte Boden (1) in mehr als 85% seiner Radial-Erstreckung im wesentlichen den gleichen Neigungswinkel besitzt und - im Radialschnitt - an seiner Innenkante (5) in einen horizontalen Bereich übergeht.

2. Stückgutrutsche nach Anspruch 1, dadurch gekennzeichnet, daß der Boden (1) und eine außenseitige Seitenwand (3) in einem gerundeten Abschnitt (4) zusammengehen.

3. Stückgutrutsche nach Anspruch 1 oder 2, dadurch gekennzeichnet, daß der Boden (1) der Rutsche sich innen zum Mittelpunkt der Rutsche erstreckt.

4. Stückgutrutsche nach Anspruch 1 oder 2, dadurch gekennzeichnet, daß der Boden (1) der Rutsche sich um einen mittigen Spindelpfosten erstreckt.

5. Stückgutrutsche nach einem der vorhergehenden Ansprüche, dadurch gekennzeichnet, daß sich die Rutsche aus Abschnitten zusammensetzt, die im Außenmaß im wesentlichen 90° besitzen, wobei benachbarte Kanten von Nachbarabschnitten mit Flanschen versehen und Zusammengehalten sind

6. Stückgutrutsche nach einem der vorhergehenden Ansprüche, wobei die Rutsche aus Metall besteht.

7. Stückgutrutsche nach einem der Ansprüche 1 bis 5, dadurch gekennzeichnet, daß die Rutsche aus Glasfaser verstärktem Kunststoffmaterial besteht.

## Revendications

1. Goulotte pour articles comportant un plancher hélicoïdal (1) ayant une paroi latérale périphérique (3), le plancher étant cambré dans la direction radiale, son bord extérieur (4) étant au-dessus du bord intérieur (5), caractérisée en ce que l'angle de cambrure (α) est lié au pas et au rayon de la goulotte de manière que des articles descendent le long de la goulotte dans des conditions telles que leur vitesse ne dépasse pas un maximum donné, et le plancher cambré (1) présente sensiblement le même angle de cambrure sur plus de 85 % de son étendue radiale et, en coupe radiale, se termine à son bord intérieur (5) par une partie horizontale.

2. Goulotte pour articles selon la revendication 1, caractérisée en ce que le plancher (1) est relié à une paroi latérale périphérique (3) par une partie arrondie (4).

3. Goulotte pour articles selon la revendication 1 ou 2, caractérisée en ce que le plancher (1) de la goulotte s'étend vers l'intérieur jusqu'au centre de la goulotte.

4. Goulotte pour articles selon la revendication 1 ou 2, caractérisée en ce que le plancher (1) de la goulotte s'étend autour d'un pilastre central (8).

5. Goulotte pour articles selon l'une quelconque des revendications précédentes, caractérisée en ce que la goulotte est formée de sections d'une étendue d'environ 90°, les bords adjacents de sections adjacentes étant à rebords et fixés entre eux.

6. Goulotte pour articles selon l'une quelconque des revendications précédentes, dans laquelle la goulotte est réalisée en métal.

7. Goulotte pour articles selon l'une quelconque des revendications 1 à 5, caractérisée en ce que la goulotte est réalisée en matière plastique armée de verre.
